# EUROPÄISCHE PATENTSCHRIFT

(11) **EP 1 947 431 B1**
(45) Veröffentlichungstag und Bekanntmachung des Hinweises auf die Patenterteilung: **20.05.2015**
(21) Anmeldenummer: 08000718.0
(22) Anmeldetag: 16.01.2008
(51) Int. Cl.: G01K 13/00, G01K 1/08, G01K 1/16

(54) **Doppeltemperatursensor**
Double temperature sensor
Double capteur de température

(30) Priorität: 17.01.2007 DE 102007002369
(43) Veröffentlichungstag der Anmeldung: 23.07.2008
(73) Patentinhaber: Drägerwerk AG & Co. KGaA, 23542 Lübeck (DE)
(72) Erfinder: Sattler, Frank, Dr., 23560 Lübeck (DE); Stark, Hartmut, 23617 Stockelsdorf (DE)
(74) Vertreter: UEXKÜLL & STOLBERG

(56) Entgegenhaltungen:
- EP-A- 1 703 267
- WO-A-98/50766
- DE-A1- 1 698 293
- DE-A1- 19 800 753
- US-A1- 2002 035 340

## Beschreibung

Die Erfindung betrifft einen Doppeltemperatursensor gemäß Anspruch 1 und die Verwendung eines derartigen Doppeltemperatursensors gemäß den Ansprüchen 14 und 15.
Doppeltemperatursensoren werden in bekannter Weise zur Messung von einer oberflächennahen Temperatur der Umgebungsluft und der Hautoberfläche verwendet. Sie kommen beispielsweise in Atemschutzprodukten bei der Erfassung und Überwachung der Körpertemperatur zum Einsatz, um Rückschlüsse auf den physiologischen Allgemeinzustand des Trägers der Atemschutzprodukte treffen zu können. Somit kann beispielsweise bei einem Einsatz in einer stark wärmeentwickelnden Umgebung ein Hitzestress der Einsatzkräfte reduziert werden, indem die Kerntemperatur der Einsatzkräfte überwacht und bei Überschreitung vorgegebener Grenzwerte die jeweilige Einsatzkraft aus diesem Bereich zurückgezogen werden kann. Dabei wird, wie beispielsweise in der DE 101 39 705 A1 beschrieben, ein erstes Temperatursensorelement eines Doppeltemperatursensors nahe an die Kopfhaut der Einsatzkraft platziert, wohingegen ein durch eine wärmeisolierende Schicht getrenntes zweites Temperatursensorelement die raumnahe Temperatur erfasst.

In der DE 198 18 170 A1 finden Doppeltemperatursensoren Anwendung in einem Verfahren zur Steuerung der Betriebsparameter eines Inkubators in Abhängigkeit des Wärmehaushaltes eines Patienten. Dabei wird aus der Verknüpfung einer gemessenen Hauttemperatur und der im Inkubator gemessenen Lufttemperatur die Kerntemperatur beziehungsweise die Peripherietemperatur ermittelt und zur Einstellung der Lufttemperatur im Inkubator verwendet.

In der DE 100 38 247 C2 wird ein Doppeltemperatursensor beschrieben, bei dem zwei Temperatursensorelemente in einem geschlossenen Sensorgehäuse auf zwei gegenüberliegenden, im Abstand wärmeisolierend voneinander angeordneten, wärmeleitenden Gehäuseteilen angebracht sind. Die elektrischen Verbindungen zu den Temperatursensorelementen sind um die Temperatursensorelemente verlaufend angeordnet und mit diesen zusammen auf den wärmeleitenden Gehäuseteilen aufgebracht. Die wärmeleitenden Gehäuseteile werden dabei durch schlecht wärmeleitende Abstandshalter mechanisch gehalten und schließen somit das Sensorgehäuse möglichst vollständig gegen die Umgebungsluft ab. Aus der DE 100 38 247 C2 ist ferner bekannt, dass die beiden Temperatursensorelemente auf den wärmeleitenden Gehäuseteilen mit einem Kleber befestigt sind. Nachteilig im Aufbau des bekannten Doppeltemperatursensors sind die unterschiedlichen Materialen, im Speziellen die thermisch isolierenden und die parallel angeordneten, wärmeleitfähigen Schichten, die bei der Herstellung verbunden werden müssen. Dies erfordert zusätzliche Arbeitsschritte. Der die Schichten verbindende Kleber verursacht Toleranzen des Wärmedurchgangskoeffizienten des Doppeltemperatursensors. Die Herstellungstoleranzen sollten jedoch möglichst klein sein, um eine Kosten verursachende einzelne Kalibrierung der Doppeltemperatursensoren zu vermeiden.

Aus der DE 26 19 471 A1 ist eine Messsonde zur elektrischen Messung der Oberflächentemperatur bekannt, die einen scheibenförmigen Körper aus einem Material mit geringer Wärmeleitfähigkeit umfasst, in dessen Oberfläche kleine Metallscheibchen eingelassen sind, auf die von Innen Halbleiterperlen von Thermistorthermometern aufgesetzt sind.

Aus der EP 0 452 141 A2 ist eine Vorrichtung zur Bestimmung der Kenngröße eines Mediums, vorzugsweise einer Flüssigkeit bekannt, bei der zwei elektrische Leiter in einem halbleitenden oder leitenden Material angeordnet sind, wobei elektrische Spannungspulse an den elektrischen Leitern appliziert werden und eine Reaktion auf die elektrischen Spannungspulse zur Bestimmung von Kenngrößen des Mediums ausgewertet wird.

Aus der DE 198 00 753 A1 ist ein Wärmeflusssensor zur Temperaturüberwachung im Innern eines Mediums mit einem ersten und einem zweiten flächig erstreckenden Thermosensor bekannt, bei dem eine Fläche des ersten Thermosensors in wärmeflussschlüssigem Kontakt mit einer Fläche des Mediums und eine Fläche des zweiten Thermosensors in wärmeflussschlüssigem Kontakt mit einer Fläche eines als Wärmesenke ausgebildeten und bemessenen Körpers angeordnet sind.

Ausgehend hiervon liegt der Erfindung die Aufgabe zugrunde, einen Doppeltemperatursensor derart weiterzubilden, dass eine einfache Herstellung bei reproduzierbarer Genauigkeit gewährleistet wird.

Diese Aufgabe wird erfindungsgemäße gelöst durch einen Doppeltemperatursensor, bestehend aus einem einstückig als Gehäuse ausgebildeten Wärmeflussisolierungsblock aus einem Isolationsmaterial und zwei Temperatursensorelementen mit jeweils zugehörigen elektrischen Verbindungen, wobei die Temperatursensorelemente in dem Wärmeflussisolierungsblock parallel zueinander und von der Außenfläche des Wärmeflussisolierungsblocks beabstandet angeordnet sind, wobei der Abstand durch eine Schicht des Isolationsmaterials gebildet ist.

Vorteilhafte Ausführungen und Weiterbildungen der Erfindung sind in den Unteransprüchen angegeben.

Die mit der Erfindung erzielten Vorteile bestehen insbesondere darin, dass bei dem erfindungsgemäßen Doppeltemperatursensor Toleranzen des Wärmedurchgangskoeffizienten minimiert werden können.

Dies wird insbesondere dadurch realisiert, dass die Temperatursensorelemente in einem Wärmeflussisolierungsblock aus einem einzigen Isolationsmaterial angeordnet sind. Das Isolationsmaterial des Wärmeflussisolierungsblocks weist eine im Wesentlichen homogene Struktur auf. Der Abstand der Temperatursensorelemente von der Außenfläche des Wärmeflussisolierungsblocks wird durch eine Schicht des Isolationsmaterials gebildet. Durch den erfindungsgemäßen Aufbau werden thermische Übergänge, die eine Wärmeflussmessung beeinflussen können, weitestgehend verhindert, wodurch eine reproduzierbare Genauigkeit des Doppeltemperatursensors sichergestellt ist. Dadurch wird ferner gewährleistet, dass der Wärmefluss zwischen den beiden Temperatursensorelementen gering und vorher bestimmbar ist. Fehlerquellen können somit minimiert und eine genauere Temperaturberechnung der Körperkerntemperatur erzielt werden.

Der erfindungsgemäße Doppeltemperatursensor kann sehr kostengünstig hergestellt werden, vorzugsweise im Spritzgussverfahren. Ein zusätzlicher Arbeitsgang zum Aufbringen der wärmeleitenden Gehäuseteile entfällt. Zudem können jeweils einzelne Kalibrierungsvorgänge der jeweiligen Doppeltemperatursensoren weitestgehend reduziert werden, da aufgrund des erfindungsgemäßen Aufbaus eine reproduzierbare Genauigkeit des Doppeltemperatursensors gewährleistet ist.

In einer bevorzugten Ausführungsform besteht der Wärmeflussisolierungsblock aus einem Polyetheretherketon (PEEK) Material, welches einerseits im Spritzgussverfahren gut verarbeitbar und andererseits durch eine geringe Wärmeleitfähigkeit gekennzeichnet ist. Weitere bevorzugte Isolationsmaterialien des Wärmeflussisolierungsblocks weisen eine Wärmeleitfähigkeit zwischen 0,05 W/mK und 0,3 W/mK auf.

Der Wärmeflussisolierungsblock ist vorzugsweise zylindrisch mit zwei lateralen Öffnungen ausgebildet, derart, dass die Temperatursensorelemente in die Öffnungen eingebracht und fixiert werden können. Es ist aber auch denkbar, dass die Temperatursensorelemente zusammen mit den elektrischen Verbindungen in dem Wärmeflussisolierungsblock durch das Spritzgussverfahren eingebettet sind. Dabei können die elektrischen Verbindungen der Temperatursensorelemente in einer weiteren Ausführung spiral-, kreis-, mäander-, zickzack-, sternförmig oder in Form eines Polygons in dem Wärmeflussisolierungsblock angeordnet sein. Damit kann eine über die elektrischen Verbindungen der Temperatursensorelemente zu- oder abgeführte Wärme aufgrund einer äußeren Temperaturstörung vermindert und eine dadurch fehlerhafte Temperaturmessung korrigiert werden. Zudem lässt sich die Wärmeleitung der elektrischen Verbindung durch Verwendung von reduzierten Drahtquerschnitten und der Anwendung von Nickeldraht anstatt Kupferdraht reduzieren.

In einer weiteren bevorzugten Ausführungsform des erfindungsgemäßen Doppeltemperatursensors ist die zur Auflage auf die Hautoberfläche bestimmte Oberfläche des Wärmeflussisolierungsblockes konkav ausgeformt. Damit wird in vorteilhafter Weise eine optimale Wärmeübertragung der Hauttemperatur an das Temperatursensorelement gewährleistet. Eine. Taillierung des Wärmeflussisolierungsblockes in axialer Richtung zwischen den Temperatursensorelementen ermöglicht eine kompaktere Bauform des Doppeltemperatursensors, da durch die den Wärmefluss behindernde Luft der Abstand zwischen den Temperatursensorelementen reduziert werden kann bei einem vergleichsweise gleichen Wärmedurchgangskoeffizienten.

Die Erfindung ist anhand von Ausführungsbeispielen in den Zeichnungen 1 bis 3 schematisch dargestellt und wird im Folgenden unter Bezugnahme auf die Zeichnungen ausführlich beschrieben.

Dabei zeigen:
- Fig. 1: einen erfindungsgemäßen Doppeltemperatursensor in zylindrischer Ausführung,
- Fig. 2: den erfindungsgemäßen Doppeltemperatursensor der Fig. 1 mit einer Taillierung und
- Fig. 3: eine Draufsicht eines erfindungsgemäßen Doppeltemperatursensor mit einem zusätzlichen lateralen Wärmeflussisolierungsteil.

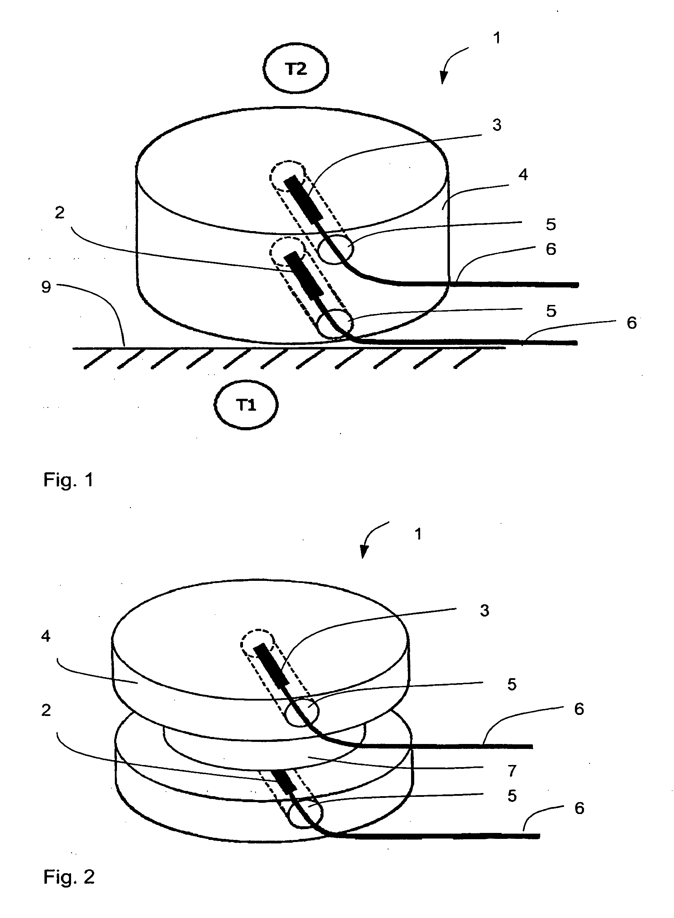

In Fig. 1 ist ein erfindungsgemäßer Doppeltemperatursensor 1 in zylindrischer Ausführung dargestellt. Der Doppeltemperatursensor 1 weist einen als Gehäuse ausgeformten Wärmeflussisolierungsblock 4 auf, der einstückig aus einem Isolationsmaterial ausgebildet ist. Zwei Temperatursensorelemente 2, 3 sind in dem Wärmeflussisolierungsblock 4 übereinander beabstandet und jeweils oberflächennah angeordnet. Die beiden Temperatursensorelemente 2, 3 sind in zwei in dem Wärmeflussisolierungsblock 4 im Wesentlichen parallel zueinander vorgesehene Öffnungen 5 eingebracht und in diesen fixiert. Die Fixierung kann durch Einkleben der Temperatursensorelemente 2, 3 erfolgen. Der erfindungsgemäße Doppeltemperatursensor 1 in zylindrischer Ausführung weist eine Bauform geringer Größe mit einer Höhe von sechs Millimetern und einem Durchmesser von zehn Millimetern auf. Es können aber auch Ausführungen mit anderen Dimensionen vorgesehen sein. Das Isolationsmaterial des Wärmeflussisolierungsblockes 4 ist homogen ausgebildet, so dass ein gleichmäßiger Wärmefluss gegeben ist. Die Temperatursensorelemente 2, 3 sind von der Außenfläche des Wärmeflussisolierungsblocks 4 beabstandet angeordnet. Der Abstand ist durch eine Schicht des Isolationsmaterials gebildet.

Das Isolationsmaterial des Wärmeflussisolierungsblockes 4 ist gekennzeichnet durch eine Wärmeleitfähigkeit zwischen 0,05 W/mK und 0,3 W/mK. Vorzugsweise ist das Isolationsmaterial des Wärmeflussisolierungsblockes 4 aus Polyetheretherketon (PEEK) ausgebildet. Es können aber auch Materialien wie beispielsweise Polymethylmethacrylat (PMMA), Polycarbonat (PC) oder Polysulfon (PSU) eingesetzt werden.

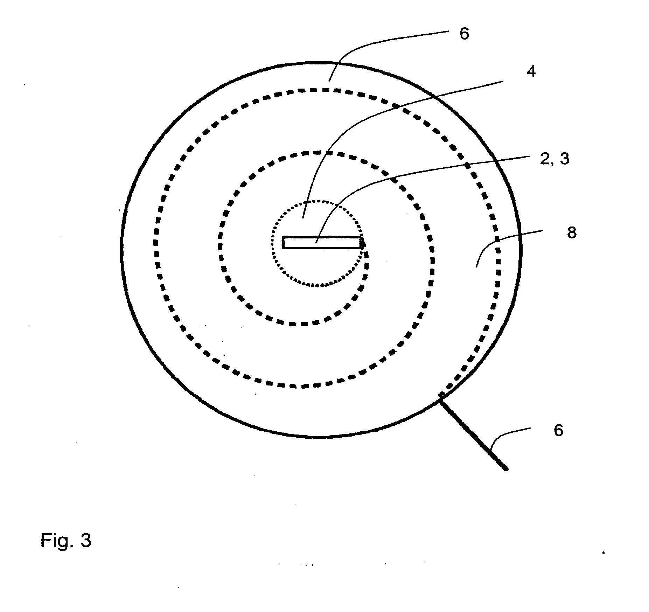

Der Wärmeflussisolierungsblock 4 kann in bekannter Weise im Spritzgussverfahren hergestellt werden. Dabei können Platzhalter für die Öffnungen 5 zur Aufnahme der Temperatursensorelemente 2, 3 vorgesehen sein, oder die Temperatursensorelemente 2, 3 sind gleichzeitig bei der Herstellung des Wärmeflussisolierungsblockes 4 in diesen eingebettet. Die elektrischen Verbindungen 6 der Temperatursensorelemente 2, 3, dargestellt in Fig. 3, können hierbei gleichzeitig mit dem Spritzgussverfahren in den Wärmeflussisolierungsblock 4 eingebracht und spiral-, kreis-, mäander-, zickzack-, sternförmig oder in Form eines Polygons in dem Wärmeflussisolierungsblock 4 angeordnet sein. Die Temperatursensorelemente 2, 3 sind vorzugsweise baugleiche, temperaturabhängige, elektrische Widerstandselemente, wie beispielsweise NTC- oder PT100-Elemente. Wie in Fig. 1 dargestellt, wird von einem ersten Temperatursensor 2 eine der Hautoberfläche 9 proportionale Temperatur T1 und von einem zweiten Temperatursensor 3 eine der Umgebungsluft proportionale Temperatur T2 erfasst. Die Form des Wärmeflussisolierungsblockes 4 kann durch die Ausgestaltung der Spritzgussform für die jeweilige Anwendung ausgebildet werden. Die Oberfläche des Doppeltemperatursensors 1, die zur Auflage auf die Hautoberfläche 9 bestimmt ist, ist für eine optimale Wärmeübertragung der Hauttemperatur an das Temperatursensorelement 2 vorzugsweise konkav ausgeformt. Der Wärmedurchgangskoeffizient zwischen den beiden Temperatursensorelementen 2, 3 des erfindungsgemäßen Doppeltemperatursensors 1 lässt sich reduzieren, indem die laterale Dimension des Wärmeflussisolierungsblocks 4 im mittleren Abschnitt verringert wird.

Die Fig. 2 zeigt den erfindungsgemäßen Doppeltemperatursensor der Fig. 1 mit einem taillierten Abschnitt 7 in axialer Richtung zwischen den beiden Temperatursensorelementen 2, 3. Der taillierte Abschnitt 7 bewirkt aufgrund der sehr geringen Wärmeleitfähigkeit von Luft, von 0,024 W/mK, eine Reduzierung des Wärmedurchgangskoeffizienten und damit einen geringeren Wärmefluss zwischen den beiden Temperatursensorelementen 2, 3. Die axiale Bauhöhe des Doppeltemperatursensors 1 lässt sich mit dieser bevorzugten Ausführung signifikant verringern.

Fig.3 zeigt eine Draufsicht eines erfindungsgemäßen Doppeltemperatursensors 1 mit einem zusätzlichen lateral angeordneten Wärmeflussisolierungsteil 8. Das Wärmeflussisolierungsteil 8 umgibt den Wärmeflussisolierungsblock 4 in radialer Richtung und dient der lateralen Temperaturisolation. Hierbei kann das Wärmeflussisolierungsteil 8 entsprechend der Anwendung des Doppeltemperatursensors 1 aus einem anderen Material als der Wärmeflussisolierungsblock 4 ausgeführt sein. In einer bevorzugten Ausführungsvariante wird der Wärmeflussisolierungsblock 4 des Doppeltemperatursensors 1 mit dem Wärmeflußisolierungsteil 8 in einem zweistufigen Spritzgussverfahren hergestellt. In einer ersten Stufe wird der Wärmeflussisolierungsblock 4 in einem Stück gespritzt. Im Anschluss wird das Wärmeflußisolierungsteil 8 um den Wärmeflussisolierungsblock 4 gespritzt und damit thermisch mit dem Wärmeflussisolierungsblock 4 verbunden. Es ist auch denkbar, beide Teile aus ein und demselben Material herzustellen. Die elektrischen Verbindungen 6 der Temperatursensorelemente 2, 3 sind in den Wärmeflussisolierungsblock 4 eingebracht und kreisförmig in dem Wärmeflussisolierungsblock 4 angeordnet. Sie weisen eine Länge von ca. zehn Zentimetern auf.

In einer weiteren, nicht dargestellten Ausführung wird die der Hautoberfläche 9 abgewandte Seite des Doppeltemperatursensors 1 mit einer dünnen Wärmeflussisolierungsschicht versehen, um bei einem plötzlichen Temperaturwechsel ein Überschwingen des Doppeltemperatursensors 1 zu verhindern.

### Bezugszeichenliste

- 1: Doppeltemperatursensor
- 2, 3: Temperatursensorelemente
- 4: Wärmeflussisolierungsblock
- 5: Öffnungen zur Aufnahme der Temperatursensorelemente
- 6: elektrische Verbindung
- 7: taillierter Abschnitt
- 8: Wärmeflussisolierungsteil
- 9: Hautoberfläche

## Patentansprüche

1. Doppeltemperatursensor zur Messung einer oberflächennahen Temperatur der Umgebungsluft und der Hautoberfläche, bestehend aus:
- einem einstückig als Gehäuse ausgebildeten Wärmeflussisolierungsblock (4) aus einem Isolationsmaterial und
- zwei Temperatursensorelementen (2,3) mit jeweils zugehörigen elektrischen Verbindungen (6), wobei die Temperatursensorelemente (2,3) in dem Wärmeflussisolierungsblock (4) im Wesentlichen parallel zueinander und von der Außenfläche des Wärmeflussisolierungsblocks (4) beabstandet angeordnet sind, wobei der Abstand durch eine Schicht des Isolationsmaterials gebildet ist.

2. Doppeltemperatursensor nach Anspruch 1, **dadurch gekennzeichnet, dass** der Wärmeflussisolierungsblock (4) zwei Öffnungen (5) zur Aufnahme der Temperatursensorelemente (2,3) aufweist, in die die Temperatursensorelemente (2,3) eingebracht und fixiert sind.

3. Doppeltemperatursensor nach Anspruch 1, **dadurch gekennzeichnet, dass** die Temperatursensorelemente (2,3) in dem Wärmeflussisolierungsblock (4) eingebettet sind.

4. Doppeltemperatursensor nach einem der vorhergehenden Ansprüche, **dadurch gekennzeichnet, dass** von einem ersten Temperatursensorelement (2) eine der Hautoberfläche (9) proportionale Temperatur und von einem zweiten Temperatursensorelement (3) eine der Umgebungsluft proportionale Temperatur erfasst wird.

5. Doppeltemperatursensor nach einem der vorhergehenden Ansprüche, **dadurch gekennzeichnet, dass** das Isolationsmaterial des Wärmeflussisolierungsblockes (4) homogen ausgebildet ist

6. Doppeltemperatursensor nach einem der vorhergehenden Ansprüche, **dadurch gekennzeichnet, dass** das Isolationsmaterial des Wärmeflussisolierungsblocks (4) eine Wärmeleitfähigkeit zwischen 0,05 W/mK und 0,3 W/mK aufweist.

7. Doppeltemperatursensor nach Anspruch 6, **dadurch gekennzeichnet, dass** das Isolationsmaterial des Wärmeflussisolierungsblock (4) aus PEEK ausgebildet ist.

8. Doppeltemperatursensor nach einem der vorhergehenden Ansprüche, **dadurch gekennzeichnet, dass** eine Oberfläche des Wärmeflussisolierungsblockes (4) gewölbt ausgeformt ist.

9. Doppeltemperatursensor nach einem der vorhergehenden Ansprüche, **dadurch gekennzeichnet, dass** die elektrischen Verbindungen (6) der Temperatursensorelemente (2,3) spiral-, kreis-, mäander-, zickzack-, sternförmig oder in Form eines Polygons in dem Wärmeflussisolierungsblock (4) angeordnet sind.

10. Doppeltemperatursensor nach einem der vorhergehenden Ansprüche, **dadurch gekennzeichnet, dass** die Temperatursensorelemente (2,3) temperaturabhängige elektrische Widerstandselemente sind.

11. Doppeltemperatursensor nach einem der vorhergehenden Ansprüche, **dadurch gekennzeichnet, dass** die Temperatursensorelemente (2,3) baugleich sind.

12. Doppeltemperatursensor nach einem der vorhergehenden Ansprüche, **dadurch gekennzeichnet, dass** der Wärmeflussisolierungsblock (4) zylindrisch ausgebildet ist.

13. Doppeltemperatursensor nach einem der vorhergehenden Ansprüche, **dadurch gekennzeichnet, dass** der Wärmeflussisolierungsblock (4) in axialer Richtung zwischen den Temperatursensorelementen (2,3) einen taillierten Abschnitt aufweist.

14. Verwendung eines Doppeltemperatursensors nach einem der vorhergehenden Ansprüche für die Bestimmung der Kerntemperatur eines Patienten.

15. Verwendung eines Doppeltemperatursensors nach einem der vorhergehenden Ansprüche für eine Simultanmessung der Hauttemperätur eines Patienten und der Temperatur seiner Umgebungsluft.

## Claims

1. A double temperature sensor for measuring a near-surface temperature of the ambient air and of the skin surface, which double temperature sensor consists of:
a heat flux insulation block (4) made in one piece as a housing from an insulation material and
two temperature sensor elements (2, 3) with respective associated electrical connections (6), wherein said temperature sensor elements (2, 3) are arranged in the heat flux insulation block (4) essentially parallel to each other and at a distance to the outer surface of the heat flux insulation block (4), wherein the distance is formed by a layer of the insulation material.

2. A double temperature sensor according to claim 1, **characterized in that** the heat flux insulation block (4) has two openings (5) for respectively receiving said temperature sensor elements (2, 3), into which openings said temperature sensor elements (2, 3) are introduced and fixed.

3. A double temperature sensor according to claim 1, **characterized in that** the temperature sensor elements (2, 3) are embedded in said heat flux insulation block (4).

4. A double temperature sensor according to any of the preceding claims, **characterized in that** a temperature proportional to the skin surface (9) is detected by a first temperature sensor element (2) and that a temperature proportional to the ambient air is detected by a second temperature sensor element (3).

5. A double temperature sensor according to any of the preceding claims, **characterized in that** the insulation material of the heat flux insulation block (4) is homogeneous.

6. A double temperature sensor according to any of the preceding claims, **characterized in that** the insulation material of the heat flux insulation block (4) has a heat conductivity between 0,05 W/mK and 0,3 W/mK.

7. A double temperature sensor according to claim 6, **characterized in that** the insulation material of the heat flux insulation block (4) is made of PEEK.

8. A double temperature sensor according to any of the preceding claims, **characterized in that** the surface of said heat flux insulation block (4) has an arched shape.

9. A double temperature sensor according to any of the preceding claims, **characterized in that** the electric connections (6) of the temperature sensor elements (2, 3) are arranged in said heat flux insulation block (4) in a spiral, circular, meandering, zigzag or star form or in the form of a polygon.

10. A double temperature sensor according to any of the preceding claims, **characterized in that** the temperature sensor elements (2, 3) are temperature-dependent electric resistor elements.

11. A double temperature sensor according to any of the preceding claims, **characterized in that** the temperature sensor elements (2, 3) are of identical design.

12. A double temperature sensor according to any of the preceding claims, **characterized in that** the heat flux insulation block (4) is of a cylindrical shape.

13. A double temperature sensor according to any of the preceding claims, **characterized in that** the heat flux insulation block (4) has an in axial direction between said temperature sensor elements (2, 3) a portion of reduced cross-section.

14. Use of a double temperature sensor according to any of the preceding claims for determining the core temperature of a patient.

15. Use of a double temperature sensor according to any of the preceding claims for simultaneous measurement of the skin temperature of a patient and of the temperature of the ambient air.

## Revendications

1. Double capteur de température pour la mesure d'une température proche de la surface de l'air environnant et de la surface principale, constitué
- d'un bloc d'isolation de flux de chaleur (4) en matériau isolant, réalisé d'une seule pièce en tant que boîtier, et
- de deux éléments de capteur de température (2, 3) avec des connexions électriques associées respectives (6), les éléments de capteur de température (2, 3) dans le bloc d'isolation de flux de chaleur (4) étant disposés essentiellement parallèlement l'un à l'autre et à distance de la surface extérieure du bloc d'isolation de flux de chaleur (4), la distance étant formée par une couche du matériau isolant.

2. Double capteur de température selon la revendication 1, **caractérisé en ce que** le bloc d'isolation de flux de chaleur (4) présente deux ouvertures (5) pour recevoir les éléments de capteur de température (2, 3), dans lesquelles sont introduits et fixés les éléments de capteur de température (2, 3).

3. Double capteur de température selon la revendication 1, **caractérisé en ce que** les éléments de capteur de température (2, 3) sont noyés dans le bloc d'isolation de flux de chaleur (4).

4. Double capteur de température selon l'une quelconque des revendications précédentes, **caractérisé en ce qu'**une température proportionnelle à la surface principale (9) est détectée par un premier élément de capteur de température (2) et une température proportionnelle à l'air environnant est détectée par un deuxième élément de capteur de température (3).

5. Double capteur de température selon l'une quelconque des revendications précédentes, **caractérisé en ce que** le matériau isolant du bloc d'isolation de flux de chaleur (4) est réalisé sous forme homogène.

6. Double capteur de température selon l'une quelconque des revendications précédentes, **caractérisé en ce que** le matériau isolant du bloc d'isolation de flux de chaleur (4) présente une conductibilité thermique comprise entre 0,05 W/mK et 0,3 W/mK.

7. Double capteur de température selon la revendication 6, **caractérisé en ce que** le matériau isolant du bloc d'isolation de flux de chaleur (4) est réalisé en PEEK.

8. Double capteur de température selon l'une quelconque des revendications précédentes, **caractérisé en ce qu'**une surface du bloc d'isolation de flux de chaleur (4) est formée sous forme courbe.

9. Double capteur de température selon l'une quelconque des revendications précédentes, **caractérisé en ce que** les connexions électriques (6) des éléments de capteur de température (2, 3) sont disposées en forme de spirale, de cercle, de méandres, de zigzag, d'étoile ou en forme de polygone dans le bloc d'isolation de flux de chaleur (4).

10. Double capteur de température selon l'une quelconque des revendications précédentes, **caractérisé en ce que** les éléments de capteur de température (2, 3) sont des éléments de résistance électrique dépendant de la température.

11. Double capteur de température selon l'une quelconque des revendications précédentes, **caractérisé en ce que** les éléments de capteur de température (2, 3) sont de construction identique.

12. Double capteur de température selon l'une quelconque des revendications précédentes, **caractérisé en ce que** le bloc d'isolation de flux de chaleur (4) est réalisé sous forme cylindrique.

13. Double capteur de température selon l'une quelconque des revendications précédentes, **caractérisé en ce que** le bloc d'isolation de flux de chaleur (4) présente dans la direction axiale entre les éléments de capteur de température (2, 3) une portion cintrée.

14. Utilisation d'un double capteur de température selon l'une quelconque des revendications précédentes pour déterminer la température centrale d'un patient.

15. Utilisation d'un double capteur de température selon l'une quelconque des revendications précédentes, pour une mesure simultanée de la température principale d'un patient et de la température de son air environnant.
